# EUROPEAN PATENT SPECIFICATION

(11) **EP 0 758 852 B1**
(45) Date of publication and mention of the grant of the patent: **30.12.1998**
(21) Application number: 95918678.4
(22) Date of filing: 15.05.1995
(51) Int. Cl.: A23L 1/305, A23L 1/227, A61K 31/195

(54) **NUTRITIONAL FORMULATION**
NAEHRUNGSFORMELL
FORMULATION NUTRITIONNELLE

(30) Priority: 13.05.1994 GB 9409646
(43) Date of publication of application: 26.02.1997
(73) Proprietor: SCIENTIFIC HOSPITAL SUPPLIES INTERNATIONAL LIMITED, Liverpool L7 9PT (GB)
(72) Inventor: SMITH, Stephen, Leyland, Liverpool L19 6PH (GB); GRIGOR, John, Mark, Vincent, Westhoughton Bolton BL5 3SE (GB)
(74) Representative: Atkinson, Peter Birch
(86) International application number: GB9501093
(87) International publication number: WO9531114

(56) References cited:
- EP-A- 0 022 361
- EP-A- 0 030 448
- EP-A- 0 488 078
- DE-A- 2 653 987
- DE-A- 4 128 260
- FR-A- 2 185 360
- DATABASE WPI Section Ch, Week 7243 Derwent Publications Ltd., London, GB; Class D13, AN 72-69310T & JP,A,47 020 374 (AJINOMOTO)

## Description

The present invention relates to a nutritional formulation and more particularly to such a formulation comprising a blend of amino acids.

There are a variety of clinical conditions for which the amino acids resulting from the digestion of proteins in a normal diet are incompatible with, or insufficient for, the particular condition. In such cases, the patients normal diet must be replaced partially or wholly by an amino acid based nutritional formulation which comprises a blend of amino acids (usually both essential and non-essential) as required by the particular clinical condition in conjunction with vitamins, trace elements, minerals, nucleotides, carbohydrates, oil, fat, flavours, and/or alimentary acceptable carriers. It will be appreciated that the amino acids provide a source of nitrogen and, in effect, a 'protein equivalent' for the formulation. The formulation may also contain protein, peptides or dipeptides if these can be tolerated in the particular clinical condition.

Thus, for example, patients suffering from phenylketonuria (PKU) must follow a permanent diet which is comprised of nutritional formulations free of phenylalanine which they are unable to metabolise. Patients with other conditions may have their normal diet partially replaced or supplemented by formulations which contain the appropriate blend of amino acids.

Although such nutritional formulations are well established there is a problem in that patients frequently find that the taste and smell of such formulations is not fully acceptable. This may give rise to problems with maintenance of strict dietary management. Thus, for example, PKU patients frequently find that phenylalanine-free protein substitutes are unpalatable and such patients may therefore not maintain 100% diet compliance. Problems with diet compliance can be particularly acute with patients who have previously been accustomed to 'ordinary' food who find it difficult to adjust, or adhere, to a diet regime based on nutritional formulation containing amino acids.

Documents DE-A-2653987, FR-A-2 185 360, EP-A-0030448, EP-A-0022361 and Database WPI, Section Ch, week 7243, Derwent Publications Ltd., London, GB; Class D13, AN 72-69310T disclose foodstuff formulations.

It is an object of the present invention to provide nutritional formulations in which the abovementioned disadvantages are obviated or mitigated.

According to the present invention there is provided a nutritional formulation which comprises a blend of amino acids containing acetyl methionine but in an amount not exceeding 20% by weight, said blend not including more than 3% by weight of methionine nor more than 0.1% by weight of glutamic acid, and said blend including a balancing percentage of other amino acids, the percentages being based on the total weight of the amino acids in the formulation.

Usually the formulation will comprise less than 10% by weight acetyl methionine (based on the weight of the blend of amino acids). The amount of acetyl methionine should be greater than the amount of any methionine present and will generally be at least 1%, more preferably at least 1.5%, e.g. at least 2%, by weight of the amino acid blend.

Nutritional formulations in accordance with the invention e.g. a drink or a confectionery bar, may for example comprise 5% to 15% by weight of the amino acid blend, e.g. 8% to 12% by weight of the blend.

Nutritional formulations in accordance with the invention have been based on our discovery that it is the combination of glutamic acid and methionine in conventional nutritional formulations which is responsible for undesirable taste and smell characteristics associated therewith. More particularly we have established that methionine and glutamic acid when present above certain levels together give rise to a 'beefy' note which is characterised as an "off-flavour" in such formulations. However we have found that simply removing either methionine or glutamic acid (but retaining the other) does not completely remove the 'off-flavour'. We believe this effect to be due to negative synergistic effect between glutamic acid and methionine in that each individually contributes a 'beefy' note to the formulation but when used in combination the overall effect (i.e. the 'total beefy' note) is less than would be expected from the individual characteristics of glutamic acid and methionine. Therefore simply removing one or the other of these acids decreases the 'beefy' note by an amount less than would be expected by removing that component and the off flavour is not completely removed: it is necessary for there to be a substantial absence of both components. By substantial absence we mean that there is not more than 3% by weight of methionine and not more than 0.1% by weight of glutamic acid (the percentages being based on the total amino acid content). If the nutritional formulation in accordance with the invention includes more than 5% (e.g. 5% to 10%) by weight of the blend of amino acids then it is most preferred that the amount of methionine in the blend is less than 1% by weight of the amino acid blend. Preferably the amount of methionine does not exceed 2% by weight, more preferably does not exceed 1% by weight, and most preferably does not exceed 0.5% by weight. Ideally the nutritional formulation of the invention does not include either methionine or glutamic acid.

Although methionine and glutamic acid are substantially excluded from the formulation in accordance with the invention, a patient will nevertheless still require methionine as part of their diet. To this end the formulation in accordance with the invention includes acetylmethionine which is metabolised to methionine. Formulations in accordance with the invention may also contain glutamine which is metabolised in the body to glutamic acid. The amount of glutamine will generally be less than 40%, more usually less than 15%, by weight based on the total weight of amino acids in the formulation. We have found that the combination of glutamine and acetylmethionine does not give rise to an off-flavour. If however the formulation is a liquid (e.g. a drink - see below) which is required to have a reasonable shelf life, then free glutamine will generally be excluded as it is unstable in aqueous liquids. If the drink is one prepared from a powder for consumption in, say, less than 24 hours then free glutamine may be present in the powder.

Nutritional formulations in accordance with the invention, in addition to being characterised by the presence of acetylmethionine and substantial absence of glutamic acid and methionine, will comprise, a combination of essential amino acids selected from leucine, iso-leucine, lysine, phenylalanine, threonine, tryptophan and/or valine as required by the particular clinical condition for which the nutritional formulation is intended. Thus, for example, formulations for PKU patients will not include phenylalanine. The formulation may also include non-essential amino acids e.g. selected from alanine, arginine, aspartic acid, cystine, glycine, histidine, proline, serine, tryosine, taurine and carnitine as necessary. Thus, a formulation for a PKU patient will include at least tyrosine (the amino acid to which phenylalanine is metabolised in the body).

It will be appreciated that the amino acids incorporated in the formulation will be in the L-form and also that the amino acids may be provided in the form of salts or within di-, tri- or higher peptides.

Other components which may be included in the formulation include carbohydrates, trace elements, vitamins, nucleotides, minerals, oil, fat, flavours, and/or alimentary acceptable carriers.

Formulations in accordance with the invention may be substantially devoid of protein although can include protein where this may be tolerated by certain conditions. Any protein present may be in the form of hydrolysed protein or semi-digested protein.

Formulations in accordance with the invention may be presented for consumption in a variety of ways. For example, the formulation may be in the form of a capsule which comprises a capsule wall (e.g. protein free) enclosing the formulation. Alternatively the formulation may be presented as a powder which can be diluted and flavoured (if desired) as required to produce a drink. A further possibility is for the formulation to be incorporated in a confectionery bar. A still further possibility is for the formulation to be in the form of a ready made drink. The aforementioned drinks and confectionery bars may be protein free.

The invention is of particular benefit in the production of nutritional formulations which require treatment at elevated temperature, e.g. UHT treatment. We have found that, for formulations containing methionine and glutamic acid, the heat treatment enhances the "beefy note" thus rendering the formulation unpalatable. In contrast, formulations in accordance with the invention do not contain substantial amounts of methionine and glutamic acid and therefore there is not a pronounced "beefy note" to the formulation. If the formulation is a liquid then, as indicated previously, it will preferably not contain free glutamine, although glutamine may be present in the form of a di- or tri-peptide.

A further benefit of the formulations in accordance with the invention is that, due to their improved palatability, they may contain higher total levels of amino acids than prior art formulations. Thus, for example, a prior art formulation in the form of a drink which incorporates both methionine and glutamic acid would generally only contain a maximum of about 5 grams total amino acids per 100 ml of drink. Drinks in accordance with the invention may comprise, for example, up to 10 grams of amino acid per 100 ml of the drink. Similarly, higher amounts of amino acid may be incorporated in other formulations in accordance with the invention, e.g. confectionery bars.

The invention will be illustrated by reference to the following non-limiting Example.

### Example 1

The following by blend of amino acids (provided as salts where indicated) was prepared.

| Amino Acid | Amount (g) |
|---|---|
| Lysine Aspartate | 13.48 |
| Leucine | 10.40 |
| Tyrosine | 9.23 |
| Proline | 7.38 |
| Arginine | 6.90 |
| Valine | 6.68 |
| Serine | 4.46 |
| Acetyl Methionine | 2.13 |
| Glycine | 6.08 |
| Iso-Leucine | 6.08 |
| Threonine | 5.11 |
| Histidine | 3.94 |
| Glutamine | 4.73 |
| Alanine | 3.88 |
| Cystine | 2.55 |
| Tryptophan | 2.05 |
| Carnitine | 0.06 |
| Taurine | 0.12 |

The above formulation was mixed with colouring, flavours and other conventional additives and admixed with water to produce a drink containing 10g of the amino acid blend per 100ml of drink. A further drink was also prepared from a modified version of the above formulation in which the acetyl methionine was replaced by methionine and glutamine was replaced by glutamic acid.

The drinks were tested by 15 trained panellists who determined that the drink in accordance with the invention had a decreased beefy note. Furthermore the drink in accordance with the invention was noted to be of improved acceptability with decreased sourness and bitterness.

The amino acid blend set out above may be incorporated in other nutritional formulations, e.g. confectionery bars, UHT treated drinks, and capsules.

## Claims

1. A nutritional formulation which is devoid of whole protein and which comprises as a protein equivalent a blend of essential and non-essential amino acids wherein said blend contains acetyl methionine but in an amount not exceeding 20% by weight, and said blend not including more than 3% by weight of methionine nor more than 0.1% by weight of glutamic acid, the percentages being based on the total weight of the amino acids in the formulation.

2. A formulation as claimed in claim 1 comprising less than 10% by weight acetyl methionine based on the total weight of the amino acids in the formulation.

3. A formulation as claimed in claim 1 or 2 containing glutamine in an amount less than 40% by weight based on the total weight of the amino acids in the formulation.

4. A composition as claimed in claim 3 containing less than 15% by weight of glutamine based on the total weight of amino acids in the formulation.

5. A composition as claimed in any one of claims 1 to 4 containing less than 2% by weight methionine.

6. A composition as claimed in claim 5 containing less than 1% by weight methionine.

7. A composition as claimed in claim 6 containing less than 0.5% by weight methionine.

8. A composition as claimed in any one of claims 1 to 7 which does not contain methionine or glutamic acid.

9. A formulation as claimed in any one of claims 1 to 8 which does not contain phenylalanine.

10. A formulation as claimed in any one of claims 1 to 9 additionally including carbohydrates, trace elements, vitamins, nucleotides, minerals, oil, fat, flavours and/or alimentary acceptable carriers.

11. A formulation as claimed in claim 10 in the form of a capsule.

12. A formulation as claimed in claim 10 in the form of a confectionery bar.

13. A formulation as claimed in claim 10 in the form of a powder which can be diluted to produce a drink.

14. A formulation as claimed in claim 1-10 in the form of a ready made drink.

15. A nutritional formulation as claimed in any one of claims 1 to 10 which comprises 5% to 15% by weight of amino acid blend.

16. A nutritional formulation as claimed in claim 15 which comprises 8% to 12% by weight of the blend.

## Patentansprüche

1. Nährstoffzubereitung, die frei von jeglichem Vollprotein ist und als Proteinäquivalent eine Mischung essentieller und nicht essentieller Aminosäuren umfaßt, wobei die Mischung Acetylmethionin enthält, jedoch in einer Menge, die 20 Gew.-% nicht übersteigt, und die Mischung nicht mehr als 3 Gew.-% Methionin und nicht mehr als 0,1 Gew.-% Glutaminsäure enthält, wobei die Prozentsätze auf das Gesamtgewicht der Aminosäuren in der Zubereitung bezogen sind.

2. Zubereitung nach Anspruch 1, die weniger als 10 Gew.-% Acetylmethionin, auf das Gesamtgewicht der Aminosäuren in der Zubereitung bezogen, umfaßt.

3. Zubereitung nach Anspruch 1 oder 2, die Glutamin in einer Menge von weniger als 40 Gew.-%, auf das Gesamtgewicht der Aminosäuren in der Zubereitung bezogen, enthält.

4. Zusammensetzung nach Anspruch 3, die weniger als 15 Gew.-% Glutamin, auf das Gesamtgewicht der Aminosäuren in der Zubereitung bezogen, enthält.

5. Zusammensetzung nach einem der Ansprüche 1 bis 4, die weniger als 2 Gew.-% Methionin enthält.

6. Zusammensetzung nach Anspruch 5, die weniger als 1 Gew.- % Methionin enthält.

7. Zusammensetzung nach Anspruch 6, die weniger als 0,5 Gew.- % Methionin enthält.

8. Zusammensetzung nach einem der Ansprüche 1 bis 7, die weder Methionin noch Glutaminsäure enthält.

9. Zubereitung nach einem der Ansprüche 1 bis 8, die kein Phenylalanin enthält.

10. Zubereitung nach einem der Ansprüche 1 bis 9, die des weiteren Kohlenhydrate, Spurenelemente, Vitamine, Nucleotide, Mineralien, Öl, Fett, Geschmacksstoffe und/oder vom Nahrungsmittelstandpunkt her annehmbare Träger enthält.

11. Zubereitung nach Anspruch 10 in Form einer Kapsel.

12. Zubereitung nach Anspruch 10 in Form einer riegelförmigen Süßware.

13. Zubereitung nach Anspruch 10 in Form eines Pulvers, das zur Herstellung eines Getränks verdünnt werden kann.

14. Zubereitung nach Anspruch 1-10 in Form eines Fertiggetränks.

15. Nährstoffzubereitung nach einem der Ansprüche 1 bis 10, die 5 bis 15 Gew.-% Aminosäuremischung umfaßt.

16. Nährstoffzubereitung nach Anspruch 15, die 8 bis 12 Gew.-% der Mischung umfaßt.

## Revendications

1. Formulation nutritionnelle qui est dépourvue de protéines totales et qui comprend, à titre d'équivalent protéinique, un mélange d'acides aminés essentiels et non essentiels, dans laquelle ledit mélange contient de l'acétylméthionine, mais en une quantité qui ne dépasse pas 20% en poids, et ledit mélange ne contenant pas plus de 3% en poids de méthionine et pas plus de 0,1% en poids d'acide glutamique, les pourcentages se basant sur le poids total des acides aminés dans la formulation.

2. Formulation selon la revendication 1, comprenant moins de 10% en poids d'acétylméthionine, basés sur le poids total des acides aminés dans la formulation.

3. Formulation selon la revendication 1 ou 2, contenant de la glutamine en une quantité inférieure à 40% en poids, basés sur le poids total des acides aminés dans la formulation.

4. Composition selon la revendication 3, contenant moins de 15% en poids de glutamine, basés sur le poids total des acides aminés dans la formulation.

5. Composition selon l'une quelconque des revendications 1 à 4, contenant moins de 2% en poids de méthionine.

6. Composition selon la revendication 5, contenant moins de 1% en poids de méthionine.

7. Composition selon la revendication 6, contenant moins de 0,5% en poids de méthionine.

8. Composition selon l'une quelconque des revendications 1 à 7, qui ne contient ni de la méthionine ni de l'acide glutamique.

9. Formulation selon l'une quelconque des revendications 1 à 8, qui ne contient pas de phénylalanine.

10. Formulation selon l'une quelconque des revendications 1 à 9, englobant en outre des glucides, des oligo-éléments, des vitamines, des nucléotides, des substances minérales, des huiles, des graisses, des aromatisants et/ou des supports acceptables du point de vue alimentaire.

11. Formulation selon la revendication 10, sous la forme d'une capsule.

12. Formulation selon la revendication 10, sous la forme d'une tablette de confiserie.

13. Formulation selon la revendication 10, sous la forme d'une poudre qui peut être diluée pour obtenir une boisson.

14. Formulation selon l'une quelconque des revendications 1 à 10, sous la forme d'une boisson déjà préparée.

15. Formulation nutritionnelle selon l'une quelconque des revendications 1 à 10, qui comprend un mélange d'acides aminés à concurrence de 5% à 15% en poids.

16. Formulation selon la revendication 15, qui comprend le mélange à concurrence de 8% à 12% en poids.
